# EUROPEAN PATENT APPLICATION

(11) **EP 1 734 670 A2**
(43) Date of publication of application: **20.12.2006**
(21) Application number: 06012408.8
(22) Date of filing: 16.06.2006
(51) Int. Cl.: H04B 7/06, H04B 7/08, H04L 27/26, H04J 13/00

(54) **Apparatus and method for transmitting and receiving pilot signal using multiple antennas in a mobile communication system**

(30) Priority: 16.06.2005 KR 20050052119
(71) Applicant: Samsung Electronics Co., Ltd., Yeongtong-gu Suwon-si, Gyeonggi-do (KR)
(72) Inventor: Han, Jin-Kyu, Yeongtong-gu Suwon-si Gyeonggi-do (DE); Lee, Ju-Ho, unknown (DE); Kim, Dong-Hee, Yeongtong-gu Suwon-si Gyeonggi-do (DE); Kwon, Hwan-Joon, Yeongtong-gu Suwon-si Gyeonggi-do (DE); Cho, Yun-Ok, Yeongtong-gu Suwon-si Gyeonggi-do (DE); Kim, Youn-Sun, Yeongtong-gu Suwon-si Gyeonggi-do (DE)
(74) Representative: Grünecker, Kinkeldey, Stockmair & Schwanhäusser Anwaltssozietät

(57) **Abstract**

An apparatus and method are provided for transmitting and receiving a pilot signal using multiple antennas in an OFDM mobile communication system. In the pilot transmitting apparatus, at least one Walsh encoder Walsh-encodes a pilot signal to be sent through each of transmit antennas. The pilot transmitting apparatus then allocates the Walsh-encoded pilot signals to a predetermined subcarrier in every OFDM symbol and transmits the allocated pilot signals through the transmit antennas.

## Description

### BACKGROUND OF THE INVENTION

### Field of the Invention:

The present invention relates generally to an apparatus and method for transmitting and receiving pilots using multiple antennas in a mobile communication system. In particular, the present invention relates to an apparatus and method for transmitting and receiving pilots to support multiple transmit antennas in an Orthogonal Frequency Division Multiplexing (OFDM) mobile communication system.

### Description of the Related Art:

Recently having gained prominence in high-speed data transmission over wired/wireless channels, OFDM is a special case of MCM (Multi-Carrier Modulation). In OFDM, a serial symbol sequence is converted to parallel symbol sequences and modulated to mutually orthogonal sub-carriers or sub-channels, prior to transmission.

The first MCM systems appeared in the late 1950's for military HF (High Frequency) radio communication, and OFDM with overlapping orthogonal sub-carriers was initially developed in the 1970's. In view of the difficulty in orthogonal modulation between multiple carriers, OFDM has limitations in applications to real systems. However, in 1971, Weinstein, et. al. proposed an OFDM scheme that applies DFT (Discrete Fourier Transform) to parallel data transmission as an efficient modulation/demodulation process, which was a driving force behind the development of OFDM. Also, the introduction of a guard interval and a cyclic prefix as a specific guard interval further mitigated adverse effects of multi-path propagation and delay spread on systems.

Accordingly, OFDM has become widely used in fields of digital data communications such as DAB (Digital Audio Broadcasting), digital TV broadcasting, WLAN (Wireless Local Area Network), and WATM (Wireless Asynchronous Transfer Mode). Although hardware complexity was an obstacle to the widespread use of OFDM, recent advances in digital signal processing technology including FFT (Fast Fourier Transform) and IFFT (Inverse Fast Fourier Transform), have enabled OFDM implementation. OFDM, similar to FDM (Frequency Division Multiplexing), provides optimum transmission efficiency in high-speed data transmission for a number of reasons. For example, it transmits data on sub-carriers, maintaining orthogonality among them. Also, efficient frequency use attributed to overlapping frequency spectrums and robustness against frequency selective fading and multi-path fading further increase the transmission efficiency in high-speed data transmission. OFDM reduces the effects of ISI (Inter-Symbol Interference) by the use of guard intervals and enables the design of a simple equalizer hardware structure. Furthermore, since OFDM is robust against impulsive noise, it is increasingly utilized in communication system configurations.

Obstacles to high-speed, high-quality data service in wireless communications arise from channel environment. The wireless radio channel environment varies frequently due to Additive White Gaussian Noise (AWGN), fading-caused received power changes, shadowing, Doppler effect caused by the mobility and frequent speed change of terminals, and interference from other users and multipath signals. Hence, it is significant to efficiently overcome the obstacles for successfully providing high-speed, high-quality data service in wireless communications.

An OFDM modulated signal is delivered in two dimensional time-frequency resources. Time-domain resources are divided into different orthogonal OFDM symbols, and frequency-domain resources are divided into orthogonal subcarriers. Therefore, one minimum resource unit called a time-frequency bin, is defined by one subcarrier and one OFDM symbol. Since different time-frequency bins are orthogonal to each other, signals transmitted on them do not interfere with one another.

In a mobile communication system, a channel varies randomly. To solve problems resulting from the channel properties, most mobile communication systems are designed to support coherent demodulation in which channel status is estimated and compensated. For estimation of the random channel status, a signal preset between a transmitter and a receiver must be sent. This signal is called a "pilot signal". The receiver estimates channel status using a received pilot signal, compensates the estimated channel status, and then performs demodulation. The pilot signal must be sent often enough to allow estimation of a channel change and preferably, it is not damaged by data signals. The OFDM system typically allocates the pilot signal to a predetermined time-frequency bin to prevent the data signal from damaging the pilot signal.

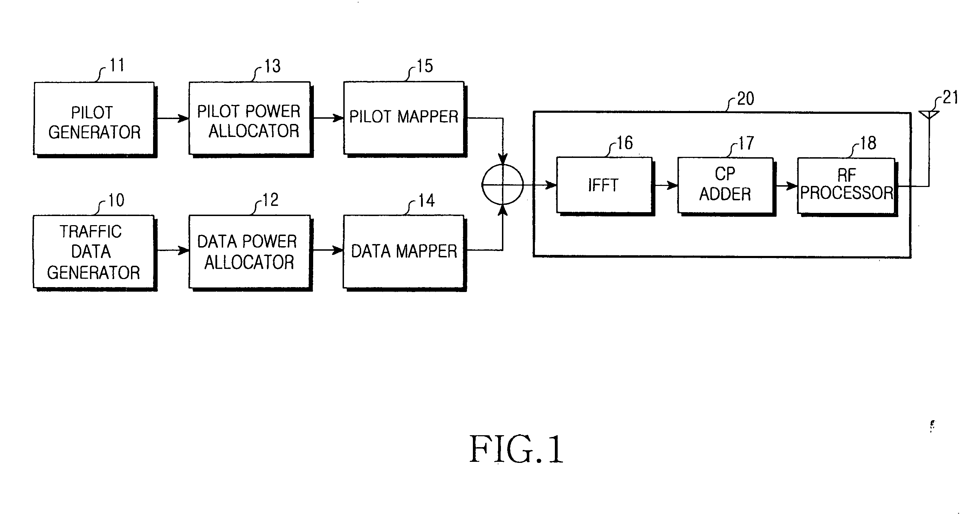

FIG. 1 is a block diagram of a typical OFDM transmitter. Referring to FIG. 1, the OFDM transmitter sends a traffic data signal and a pilot signal. A traffic data generator 10 generates a modulated data signal in accordance with time-frequency bins allocated to the data signal. A pilot generator 11 generates a modulated pilot signal in accordance with time-frequency bins allocated to the pilot signal. A data power allocator 12 and a pilot power allocator 13 allocate appropriate power to the data signal and the pilot signal, respectively. A power ratio between the data signal and the pilot signal is determined based on the amount of the pilot signal and a modulation scheme used for the data. A data mapper 14 and a pilot mapper 15 map the power-allocated signals to the predetermined time-frequency bins, respectively, such that the pilot signal and the data signal are not allocated to the same time-frequency bin. When a transmission signal including the pilot signal and the data signal is completed, an OFDM signal generator 20 generates an OFDM signal using the transmission signal. The OFDM signal generator 20 includes an IFFT processor 16, a CP adder 17, and an RF processor 18. The IFFT processor 16 allocates the transmission signal to orthogonal subcarriers. The CP adder 17 adds a CP to the IFFT signal received from the IFFT processor 16 in order to avoid multipath fading-incurred ISI. The RF processor 18 upconverts the baseband signal received form the CP adder 17 into an RF signal and sends the RF signal through a transmit antenna 21.

A mobile communication channel is characterized by Doppler spread caused by the mobility of a Mobile Station (MS) and multipath delay spread. The channel response varies over time due to the Doppler spread, and varies in frequency due to the delay spread. As the MS moves faster, the Doppler spread is increased and thus, the channel varies in a relatively short time. In this situation, pilot signals must be allocated more frequently on the time axis, for channel estimation. However, when the delay spread is lengthened, the channel varies between subcarriers with a relatively narrow frequency difference. To avoid channel estimation errors, the pilot signals must be more frequent on the frequency axis. Thus, an appropriate pilot layout is changed depending on how the mobile communication system sets a supportable channel environment. For example, the mobile communication system needs to allocate more time-frequency resources to the pilot signal in order to conduct active communications in an environment with fast moving MSs and long delay spread. However, in an indoor environment with smaller delay spread and slower MSs, allocation of more time-frequency resources to the pilot signal is not efficient because it is equivalent to a reduction of available resources for data.

The OFDM system allocates the pilot signal to a predetermined time-frequency bin. The receiver must estimate the channel response of the time-frequency bin of the data in order to compensate channel-caused distortion. Therefore, the receiver receives the pilot signal in the predetermined time-frequency bin and estimates the channel response of the time-frequency bin. Then the receiver estimates the channel of the time-frequency bin of the data by interpolation of the channel response estimate.

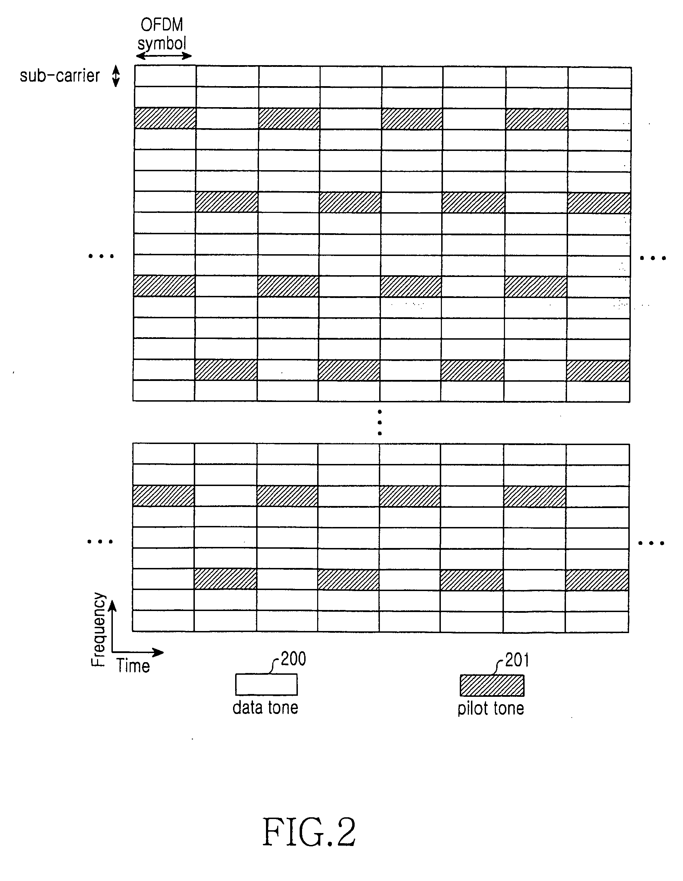

FIG. 2 illustrates a distributed pilot allocation method in the typical OFDM system.

Referring to FIG. 2, a data signal and a pilot signal are allocated to time-frequency bins represented as data tones 200 and pilot tones 201, respectively. Since the receiver estimates a channel by two-dimensional interpolation, allocation of pilots on the same subcarriers in each OFDM symbol or allocation of pilots on all subcarriers in a particular OFDM symbol leads to consumption of resources more than needed for pilot transmission. Accordingly, the distributed allocation of the pilot signal to two-dimensional time-frequency resources is carried out in the conventional OFDM system because it effectively reduces the ratio of pilot resources to total resources.

Recently, techniques for increasing reception quality or transmission capacity using multiple antennas have been attempted for application to the mobile communication system. Major examples of such techniques are adaptive beamforming, spatial diversity, and spatial multiplexing. Considering that a receiver must estimate the channel status of all transmit antennas in a multiple antenna system, it is preferred that a transmitter send orthogonal pilot signals through the respective transmit antennas.

Also, it is necessary to send the pilot signal often enough to overcome the Doppler spread and delay spread of the channels from the individual transmit antennas. It thus follows that the amount of resources allocated to the pilot signal increases with the number of transmit antennas.

In OFDM, different time-frequency bins are mutually orthogonal. Allocation of pilots from different transmit antennas to different time-frequency bins make the pilots orthogonal for the respective transmit antennas.

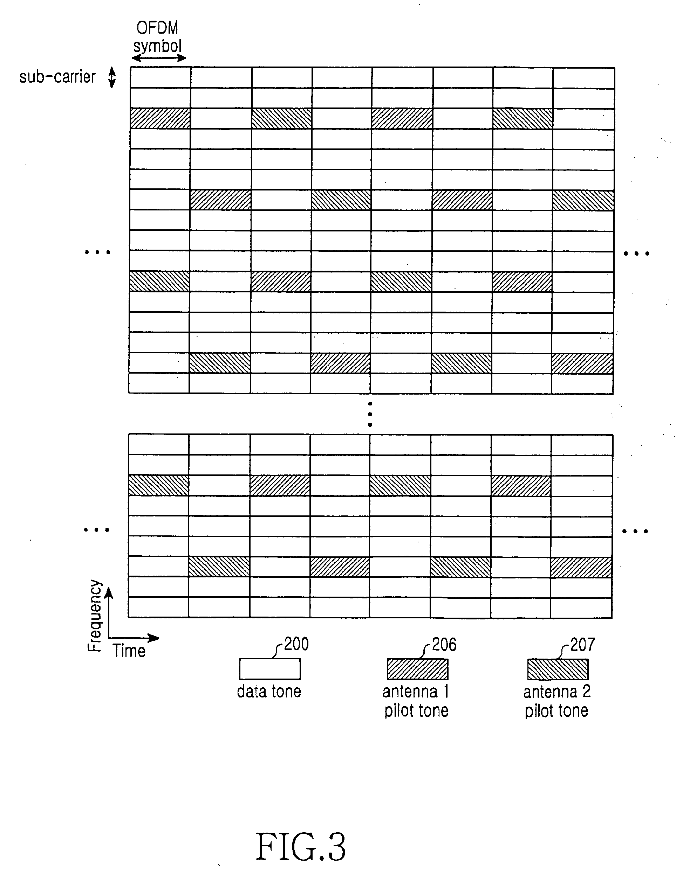

FIG. 3 illustrates an exemplary distributed pilot allocation method for typically supporting multiple antennas.

Referring to FIG. 3, a pilot signal (or tone) 206 from a first transmit antenna (antenna 1) and a pilot signal (or tone) 207 from a second transmit antenna (antenna 2) are alternately allocated at predetermined subcarrier positions, so that they are orthogonal. Pilots from different transmit antennas must be rendered orthogonal and allocated to orthogonal resources. Since different time-frequency bins are orthogonal to each other in the OFDM system, the pilots are allocated to different resources.

Compared to the pilot allocation illustrated in FIG. 2, despite the increased number of transmit antennas, the amount of pilot resources is kept the same. As a result, the receiver can estimate a channel response from each transmit antenna in a limited environment. That is, the maximum delay spread and the maximum mobile velocity which enable channel estimation are reduced. If a channel estimation-allowing environment is maintained, the number of time-frequency bins for pilots must be increased with that of the transmit antennas.

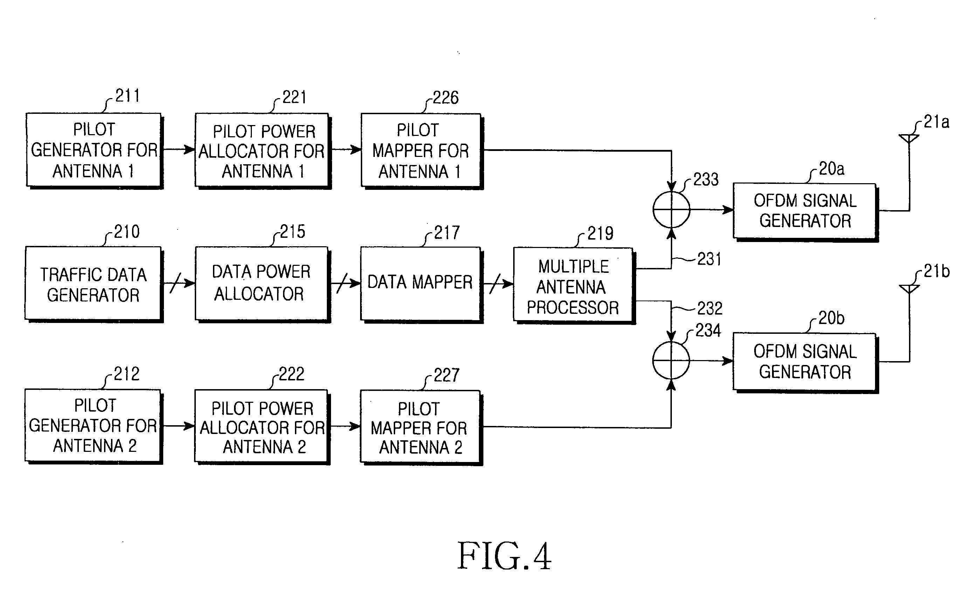

FIG. 4 is a block diagram of a typical OFDM transmitter using two transmit antennas.

Referring to FIG. 4, a traffic data generator 210 generates a traffic data signal. How the data signal is generated depends on a used multiple transmit antenna scheme. For example, in the case of spatial multiplexing, as many data streams as a maximum number of transmit antennas can be generated. A data power allocator 215 allocates power to the data signal and a data mapper 217 maps the data signal to predetermined data time-frequency bins. A multiple antenna processor 219 then applies multiple antenna processing to the data signal. A variety of multiple antenna processing techniques are available and their description is not provided herein. A signal 231 for a first transmit antenna 21a (antenna 1) and a signal 232 for a second transmit antenna 21b (antenna 2) result from the multiple antenna processing.

The signal 231 is added to a pilot signal output from a pilot mapper 226 for antenna 1 in a first adder 233 and the sum signal is sent to a first OFDM signal generator 20a. The first OFDM signal generator 20a generates an OFDM signal using the sum signal and sends the OFDM signal through antenna 1.

The signal 232 is added to a pilot signal output from a pilot mapper 227 for antenna 2 in a second adder 234 and the sum signal is sent to a second OFDM signal generator 20b. The second OFDM signal generator 20b generates an OFDM signal using the sum signal and sends the OFDM signal through antenna 2.

Pilot generators 211 and 212 for antenna 1 and antenna 2 generate the pilot signals to be sent through antenna 1 and antenna 2, respectively. The pilot signals may be the same or different for the transmit antennas, which does not result in issues because the pilot signals are sent orthogonal through the transmit antennas. If the same pilot signal is sent through antenna 1 and antenna 2, the pilot generators 211 and 212 are identical devices.

After the generation of the pilot signals for the respective transmit antennas, a pilot power allocator 221 for antenna 1 allocates power to the pilot signal. Different power may be allocated to a pilot signal for each transmit antenna. For example, the pilot signal for antenna 1 may have more power than that for antenna 2. Some typical multiple antenna techniques offer no gains to users with a low average Signal-to-Interference and Noise Ratio (SINR). For such users, when the same power is allocated to pilot signals for all antennas, gains are not high despite resource consumption, resulting in loss. Therefore, pilot power is set to be different for transmit antennas when needed.

The pilot mappers 226 and 227 map the power-allocated pilot signals to predetermined time-frequency bins as illustrated in FIG. 3. The transmission signal for antenna 1 is generated by adding the pilot signal and data signal for antenna 1 in the first adder 233. The OFDM signal generator 20a generates the OFDM signal for antenna 1 using the transmission signal. The OFDM signal generator 20a is comprised of the IFFT processor 16, the CP adder 17, and the RF processor 18, as illustrated in FIG. 1. In the same manner, the pilot signal and data signal for antenna 2 are added in the second adder 234 and converted to an OFDM signal for antenna 2 in the OFDM signal generator 20b.

The above distributed pilot allocation method offers the benefit of effective reduction of resources for pilots, but has problems with interference estimation.

While the conventional mobile communication system operates in a circuit-switched manner, i.e., uses a dedicated channel for each user to provide voice-oriented service, a packet switching method has been adopted by sharing a channel among a plurality of users to provide multimedia and data services.

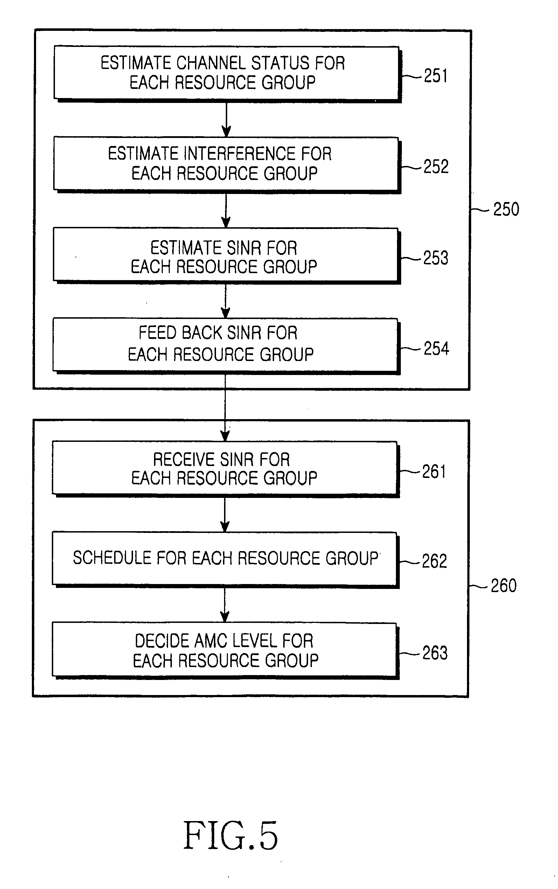

FIG. 5 is a flowchart illustrating an operation for feeding back an SINR measurement to a transmitter by a receiver and performing Adaptive Modulation and Coding (AMC) based on the SINR measurement by the transmitter in a typical packet-switched mobile communication system.

Referring to FIG. 5, the receiver measures an SINR and feeds it back to the transmitter in step 250 and the transmitter determines a transmission scheme based on the SINR in step 260.

Step 250 will first be detailed. The receiver estimates the channel status of each resource group corresponding to a time-frequency bin in OFDM in step 251. The distortion of a signal through a channel is found from channel estimation. Also, the received power of an intended signal can be calculated using channel estimation information. The receiver then estimates the interference of each resource group in step 252 and calculates the SINR of the resource group using the interference and the received power in step 253. The interference refers to the strength of an unwanted signal including noise and interference. The receiver feeds back the SINR to the transmitter in step 254.

The transmitter receives the SINR of each resource group from the receiver in step 261 and schedules for each resource group by determining a user to receive a transmission signal based on the channel status of each resource group in step 262. It is possible to carry out two-dimensional time-frequency scheduling because of the SINR of each resource group. This two-dimensional time-frequency scheduling increases scheduling freedom relative to scheduling on the time axis only, thereby offering a high multi-user diversity gain. In step 263, the transmitter decides an AMC level for each resource group. Step 263 does not always follow step 262. In order to select the best user for each resource group, it is necessary to compare users after applying the best AMC levels to the users. Therefore, the determination of the AMC levels for the users of step 263 is completed through step 262.

Reliable SINR feedback for each resource group is critical to the selection of the best user and the best transmission scheme for the selected user in each resource group. For SINR calculation, accurate interference estimation is essential. If the transmitter controls transmit power allocation to each resource group for the purpose of increasing capacity, interference for each resource group from another transmitter is random. Pilots are required to estimate the interference like channel estimation.

There are limitations in estimating two random values, i.e. a channel response and an interference using distributed pilots. Typically, the channel response estimation precedes the interference estimation. In this case, channel response estimation errors are reflected in the interference estimation. In other words, the channel response estimation errors cause interference estimation errors. This problem can be solved by estimating the interference during a period where the channel changes little. However, since the pilots are scattered to allow channel estimation by interpolation, it is difficult to collect pilots during an invariant channel period. Therefore, the distributed pilot allocation causes more errors in interference estimation due to channel estimation errors.

Accordingly, a need exists for a system and method for transmitting and receiving pilots to support multiple transmit antennas in an Orthogonal Frequency Division Multiplexing (OFDM) mobile communication system.

### SUMMARY OF THE INVENTION

An object of the present invention is to substantially solve at least the above problems and/or disadvantages and to provide at least the advantages below. Accordingly, embodiments of the present invention provide an apparatus and method for transmitting and receiving a pilot signal using multiple antennas to prevent errors in interference estimation caused by channel estimation errors in an OFDM mobile communication system using scheduling and an AMC scheme.

Embodiments of the present invention can also provide an apparatus and method for transmitting and receiving a pilot signal using multiple antennas to ensure orthogonality between antennas in an OFDM mobile communication system using scheduling and an AMC scheme.

Embodiments of the present invention can also provide an apparatus and method for transmitting and receiving a pilot signal using multiple antennas to accurately estimate interference in an OFDM mobile communication system using a multiple antenna scheme.

Embodiments of the present invention can also provide an apparatus and method for transmitting and receiving a pilot signal using multiple antennas to accurately estimate interference for scheduling in an OFDM mobile communication system using a multiple antenna scheme.

Embodiments of the present invention can also provide an apparatus and method for transmitting and receiving a pilot signal using multiple antennas to allocate pilots to the same number of time-frequency bins even when the number of transmit antennas increases in a mobile communication system.

Embodiments of the present invention can also provide an apparatus and method for transmitting and receiving a pilot signal using multiple antennas to estimate an accurate SINR through accurate interference measurement and perform scheduling, and an AMC scheme based on the accurate SINR, and thus, increase system capacity in a mobile communication system.

According to one aspect of embodiments of the present invention, in a pilot transmitting apparatus using multiple antennas in an OFDM mobile communication system, at least one Walsh coverer Walsh-covers a pilot signal to be sent through each of the transmit antennas. At least one transmitter allocates the Walsh-covered pilot signals to a predetermined subcarrier in every OFDM symbol and transmits the allocated pilot signals through the transmit antennas.

According to another aspect of embodiments of the present invention, in an apparatus for receiving a pilot signal from multiple transmit antennas in an OFDM mobile communication system, at least one Walsh decoverer Walsh-decovers a pilot signal received from each of the transmit antennas. At least one noise and interference estimator performs interference estimation and channel estimation for each of the Walsh-decovered pilot signals. An SINR estimator estimates an SINR using interference estimates and channel estimates received from the at least one noise and interference estimator.

According to a further aspect of embodiments of the present invention, in a pilot transmitting method using multiple antennas in an OFDM mobile communication system, a pilot signal to be sent through each of the transmit antennas is Walsh-covered, allocated to a predetermined subcarrier in every OFDM symbol, and transmitted through the transmit antenna.

According to still another aspect of embodiments of the present invention, in a method of receiving a pilot signal from multiple transmit antennas in an OFDM mobile communication system, a pilot signal received from each of the transmit antennas is Walsh-decovered. Interference estimation and channel estimation are performed for each of the Walsh-decovered pilot signals. An SINR is estimated using interference estimates and channel estimates achieved from the interference estimation and channel estimation.

According to yet another aspect of embodiments of the present invention, in a pilot transmitting apparatus using multiple antennas in an OFDM mobile communication system, at least one demultiplexer divides pilot signals to be sent through the transmit antennas into Walsh-covered pilot signals and distributed pilot signals. At least one transmitter maps the Walsh-covered pilot signals to one subcarrier in each AMC subband and distributed pilots to different time-frequency bins, and transmits the mapped pilot signals through the transmit antennas.

### BRIEF DESCRIPTION OF THE DRAWINGS

The above and other objects, features and advantages of embodiments of the present invention will become more apparent from the following detailed description when taken in conjunction with the accompanying drawings, in which:
FIG. 1 is a block diagram of a typical OFDM transmitter;
FIG. 2 illustrates a distributed pilot allocation method in a typical OFDM system;
FIG. 3 illustrates a distributed pilot allocation method for typically supporting multiple antennas;
FIG. 4 is a block diagram of a typical OFDM transmitter using two transmit antennas;
FIG. 5 is a flowchart illustrating an operation for performing scheduling and an AMC scheme based on an SINR measurement received from a receiver in a transmitter in a typical packet-switched mobile communication system;
FIG. 6 illustrates an exemplary pilot allocation method for two transmit antennas according to a first embodiment of the present invention;
FIG. 7 is a flowchart illustrating an exemplary operation for Walsh-covering a pilot signal and allocating the Walsh-covered pilot signal to time-frequency bins in a transmitter according to an embodiment of the present invention;
FIG. 8 illustrates an exemplary operation for Walsh-covering a pilot signal in the transmitter according to an embodiment of the present invention;
FIG. 9 illustrates an exemplary operation for Walsh-covering pilot signals for two transmit antennas according to an embodiment of the present invention;
FIG. 10 is a block diagram of an exemplary OFDM transmitter with multiple antennas using the pilot allocation method according to an embodiment of the present invention;
FIG. 11 is a block diagram of an exemplary OFDM receiver operating in accordance with the pilot allocation method according to an embodiment of the present invention;
FIG. 12 illustrates a detailed exemplary operation for calculating noise and interference according to an embodiment of the present invention;
FIG. 13 illustrates an exemplary pilot allocation method for four transmit antennas according to a second embodiment of the present invention;
FIG. 14 illustrates a detailed exemplary operation for generating pilot signals in accordance with the pilot allocation method in the transmitter according to the second embodiment of the present invention;
FIG. 15 illustrates an exemplary pilot allocation method for four transmit antennas according to a third embodiment of the present invention;
FIG. 16 illustrates a detailed exemplary operation for generating pilot signals in accordance with the pilot allocation method according to the third embodiment of the present invention;
FIG. 17 illustrates an exemplary pilot allocation method using a binary Walsh code for four transmit antennas according to a fourth embodiment of the present invention;
FIG. 18 illustrates an exemplary hybrid pilot allocation method using a fixed pilot allocation and a distributed pilot allocation in combination according to a fifth embodiment of the present invention; and
FIG. 19 is a block diagram of an exemplary OFDM transmitter with multiple antennas using the hybrid pilot allocation method according to the fifth embodiment of the present invention.

Throughout the drawings, like reference numerals will be understood to refer to like parts, components and structures.

### DETAILED DESCRIPTION OF THE EXEMPLARY EMBODIMENTS

Exemplary embodiments of the present invention will be described herein below with reference to the accompanying drawings. In the following description, well-known functions or constructions are not described in detail since they would obscure the invention in unnecessary detail.

Exemplary embodiments of the present invention are described below to illustrate a system and method of transmitting orthogonal pilot signals through different transmit antennas in an OFDM mobile communication system using a multiple antenna scheme. Especially, embodiments of the present invention are directed to a pilot structure that enables the use of pilots in SINR estimation as well as channel estimation, in order to effectively support AMC. An SINR estimation method based on the pilot structure in a receiver is also provided.

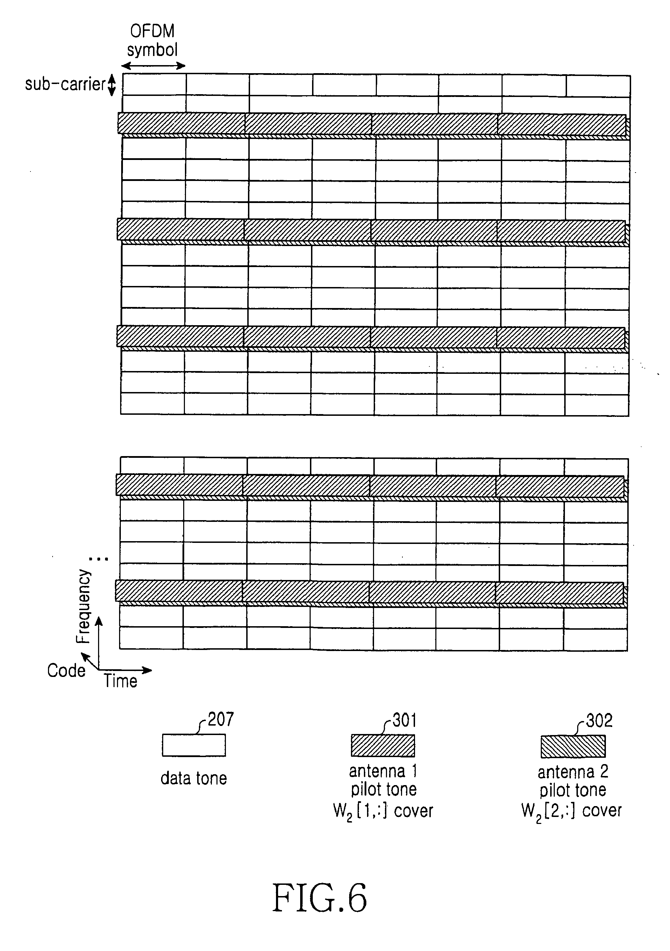

FIG. 6 illustrates an exemplary pilot allocation method for two transmit antennas according to a first embodiment of the present invention.

Referring to FIG. 6, the horizontal axis represents time and the vertical axis represents frequency. Reference numerals 301 and 302 denote pilot signals from antenna 1 and antenna 2, respectively. One pilot is defined by two OFDM symbols in time and continues along a predetermined frequency axis. That is, a pilot signal is sent on a predetermined subcarrier across all OFDM symbols. Pilot signals from different transmit antennas use the same subcarrier. Since orthogonality is not ensured between different pilot signals on the same time-frequency bin, the pilot signals are Walsh-covered on the basis of two successive OFDM symbols. Hence, a receiver must Walsh-decover every two successive OFDM symbols for channel estimation. In the illustrated case of FIG. 6, W₂[1,:] denotes a first Walsh code (+1, +1) of length 2, and W₂[2,:] denotes a second Walsh code (+1, -1) of length 2.

For a number of reasons, the pilot signals are always delivered on predetermined subcarriers.

For example, it can be assumed that the channel response of the same subcarrier does not change significantly between adjacent OFDM symbols. Thus it is easy to ensure orthogonality between pilot signals from different transmit antennas using Walsh codes. Especially, the channel response of the same subcarrier between adjacent OFDM symbols changes less than that of the same OFDM symbol between adjacent subcarriers. An OFDM symbol duration is usually set too small to cause a channel change within an OFDM symbol. Hence, there is little change in channel response between adjacent OFDM symbols. However, small change in channel response cannot be ensured between adjacent subcarriers within the same OFDM symbol. A CP length is determined such that a delay spread of up to 10% of the OFDM symbol duration can be overcome. A channel whose delay spread reaches up to the CP length experiences a rapid channel response change about every 10 subcarriers. In this case, since the channel response change between adjacent subcarriers cannot be neglected, it is difficult to ensure orthogonality between pilot signals from different transmit antennas through Walsh covering.

Also, for example, when the channel response varies little, a random channel change can be estimated by means of interference alone. Therefore, the influence of channel estimation errors on interference estimation can be avoided.

Still further, for example, in the case of a large channel response change between OFDM symbols, a pilot structure does not significantly affect the degradation of scheduling and AMC performance. The large channel response change between OFDM symbols impairs orthogonality through Walsh covering and makes accurate interference measurement difficult as well. However, since SINR feedback information is not reliable for a channel whose response varies fast over time, the scheduling and AMC performance already drops. In this state, a contribution to the performance degradation made by the pilot structure is negligibly small.

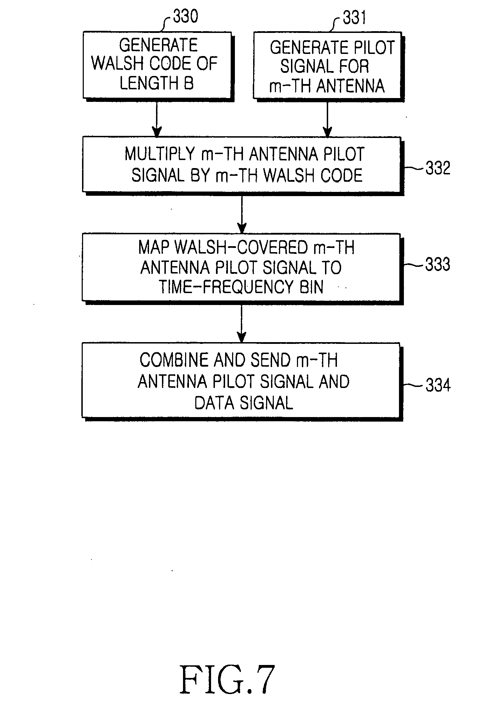

FIG. 7 is a flowchart illustrating an exemplary operation for Walsh-covering a pilot signal and allocating the Walsh-covered pilot signal to time-frequency bins in a transmitter according to an embodiment of the present invention.

Referring to FIG. 7, the transmitter generates a Walsh code of length B in step 330. The Walsh code length B is determined according to the number of transmit antennas. For example, for two transmit antennas, a Walsh code of length 2 is sufficient and for four transmit antennas, a Walsh code of length 4 is needed. As described in greater detail below, even for three or more transmit antennas, a pilot structure of embodiments of the present invention can be designed using a length 2 binary Walsh code.

In step 331, the transmitter generates a pilot signal for each transmit antenna. The pilot signals may be the same or different for different transmit antennas. As illustrated in FIG. 7, steps 330 and 331 are not sequential but substantially simultaneous. The transmitter then multiplies a pilot signal for an m^{th} transmit antenna by an m^{th} Walsh code, for Walsh covering in step 332. The Walsh covering renders the pilot signals for the transmit antennas to be mutually orthogonal. In step 333, the transmitter maps the pilot signals to predetermined time-frequency bins. The transmitter then adds each of the pilot signals to a data signal for the same transmit antenna and sends the sum signals through corresponding transmit antennas in step 334. Such an exemplary embodiment of the present invention is characterized in that the pilot time-frequency bins have the same subcarriers in every OFDM symbol and the transmit antennas send their pilot signals in the same time-frequency bins.

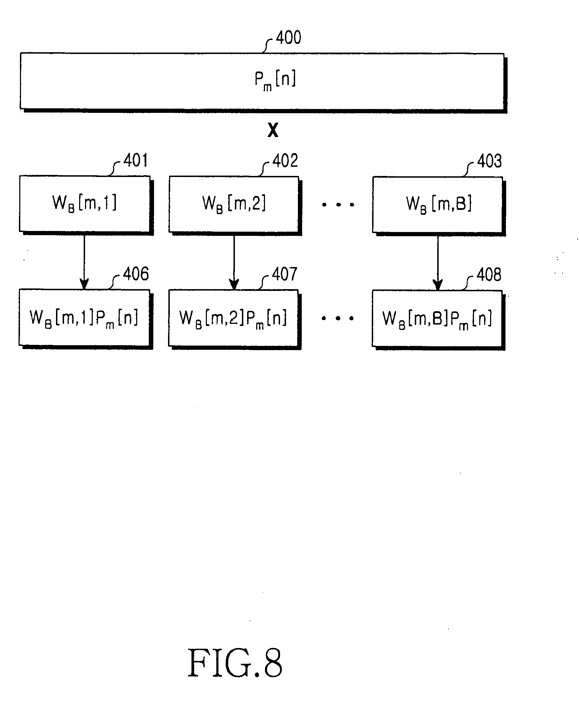

FIG. 8 illustrates an exemplary operation for Walsh-covering a pilot signal in the transmitter according to an embodiment of the present invention.

Referring to FIGs. 7 and 8, reference numeral 400 denotes an n^{th} value Pₘ[n] of the pilot sequence to be sent through the m^{th} transmit antenna, generated in step 331 of FIG. 7, wherein n is counted over time. The value Pₘ[n] is multiplied by the Walsh code 401, 402 and 403 generated in step 330, wherein W_{B}[m, k] denotes a k^{th} value of the m^{th} Walsh code of length B and its value is +1 or -1 in view of the nature of the Walsh code. The multiplication in step 332 results in a pilot signal to be allocated to a time-frequency bin, as indicated by reference numerals 406, 407 and 408. The Walsh code multiplication is called Walsh covering.

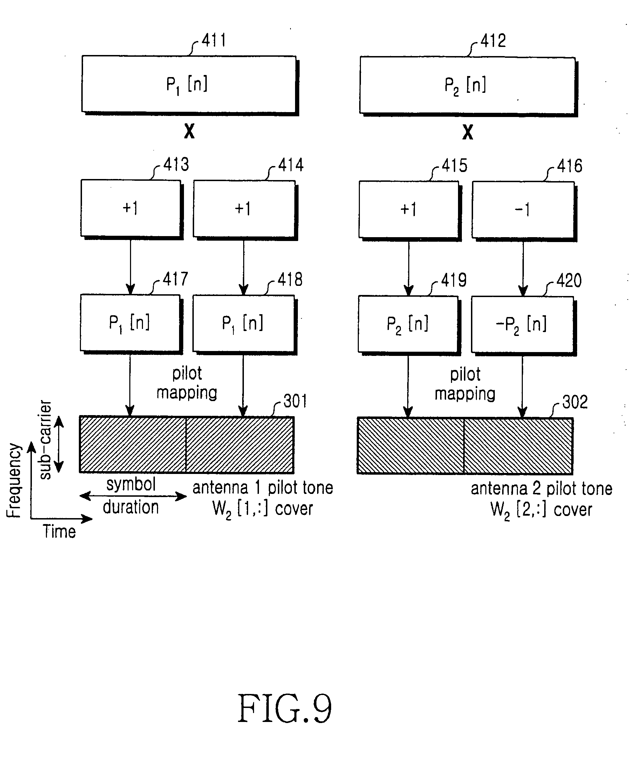

FIG. 9 illustrates an exemplary operation for Walsh-covering pilot signals for two transmit antennas according to an embodiment of the present invention.

Referring to FIG. 9, reference numerals 411 and 412 denote n^{th} pilot symbols to be sent through antenna 1 and antenna 2, respectively. As stated above, the two pilot symbols may have the same value. Pilots 417 and 418 are created by multiplying the pilot symbol 411 by a first binary Walsh code (+1, +1), and pilots 419 and 420 are created by multiplying the pilot symbol 412 by a second binary Walsh code (+1, -1). These pilots are allocated to time-frequency bins. Specifically, the pilots 417 and 418 are allocated to the same subcarrier in two adjacent OFDM symbols, thus forming a pilot signal 301, and the pilots 419 and 420 are allocated to the same subcarrier in the two adjacent OFDM symbols, thus forming another pilot signal 302. Finally, the pilot signals 301 and 302 are combined and sent in the same time-frequency bins through antenna 1 and antenna 2, respectively.

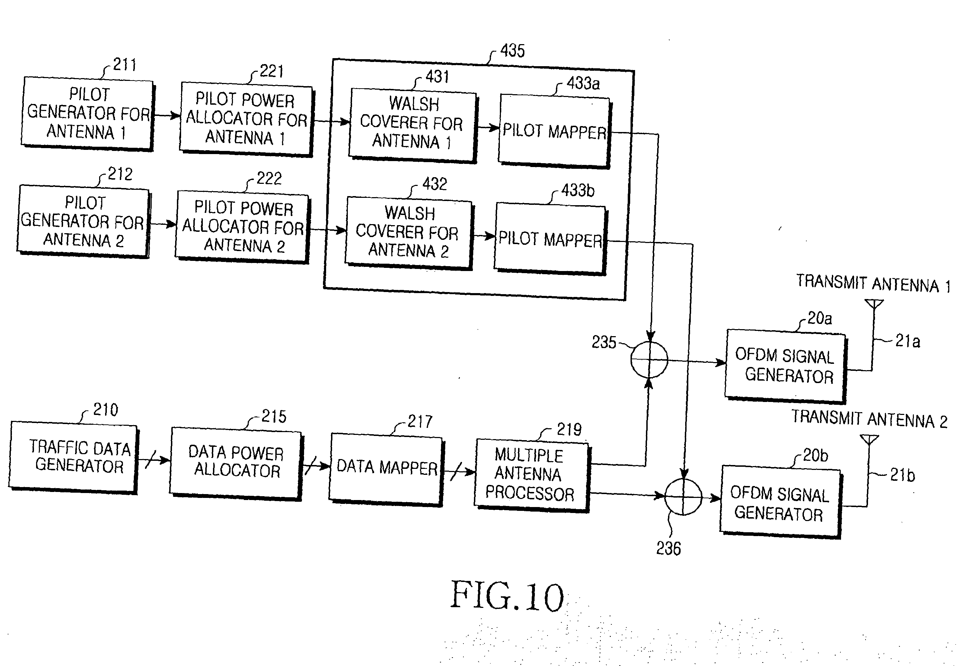

FIG. 10 is a block diagram of an exemplary OFDM transmitter with multiple antennas using the pilot allocation method according to an embodiment of the present invention.

Referring to FIG. 10, a pilot generator 211 for antenna 1 and a pilot generator 212 for antenna 2 generate a pilot signal for antenna 1 and a pilot signal for antenna 2, respectively. A pilot power allocator 221 for antenna 1 and a pilot power allocator 222 for antenna 2 allocate appropriate power to the pilot signals received from the pilot generators 211 and 212, respectively. Different power levels may be allocated to the pilot signals for the different transmit antennas, as described above with reference to FIG. 4.

After the power allocation, a Walsh coverer 431 for antenna 1 multiplies the pilot signal for antenna 1 received from the pilot power allocator 221 by a predetermined Walsh code, for Walsh covering, and a Walsh coverer 432 for antenna 2 multiplies the pilot signal for antenna 2 received from the pilot power allocator 222 by another predetermined Walsh code, for Walsh covering. As a result, the pilot signals 301 and 302 illustrated in FIG. 6 are created. Pilot mapper 433a and 433b map these pilot signals to predetermined pilot time-frequency bins. Notably, the pilot signals are mapped to the same time-frequency bins, even though for the different transmit antennas, and each of the time-frequency bins has the same subcarrier in successive OFDM symbols. The process of Walsh covering and mapping the Walsh-covered pilot signals to time-frequency bins is called Walsh-covered multiple-antenna pilot signal generation. This process takes place in a Walsh-covered multiple-antenna pilot generator 435.

A first adder 235 adds the pilot signal received from the pilot mapper 433a to a data signal received from a multiple antenna processor 219 and the sum signal is sent through antenna 1 after processing in the OFDM signal generator 20a. A second adder 236 adds the pilot signal received from the pilot mapper 433b to a data signal received from the multiple antenna processor 219 and the sum signal is sent through antenna 2 after processing in the OFDM signal generator 20b.

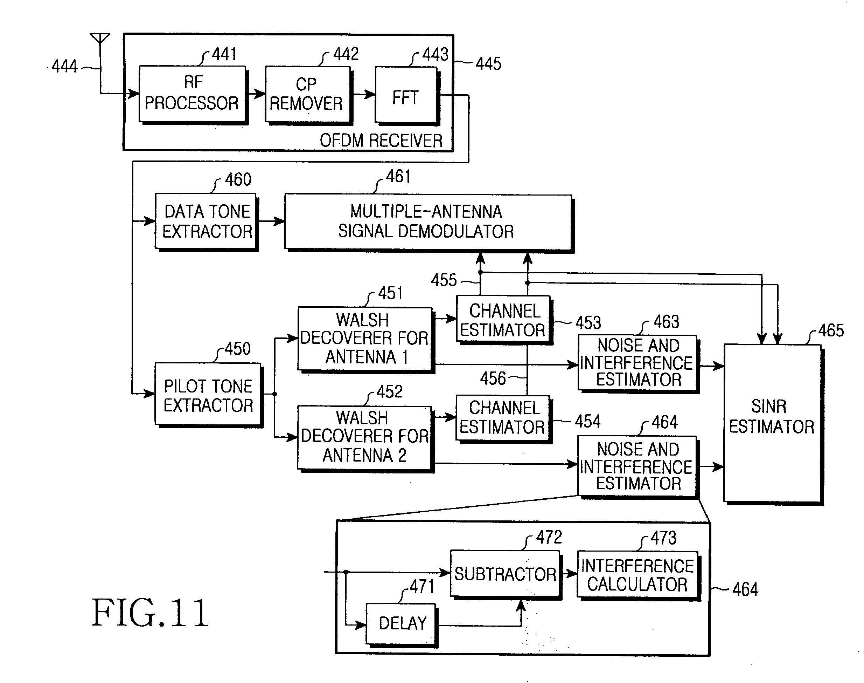

FIG. 11 is a block diagram of an exemplary OFDM receiver operating in accordance with the pilot allocation method according to an embodiment of the present invention.

Referring to FIG. 11, an RF processor 441 downconverts an RF signal received through an antenna 444 into a baseband signal. A CP remover 442 eliminates a CP from the baseband signal and an FFT processor 443 FFT-processes the CP-removed signal. The RF processor 441, the CP remover 442, and the FFT processor 443 are collectively called an OFDM receiver 445. After the OFDM reception, a signal allocated to each time-frequency bin can be extracted.

A pilot tone extractor 450 extracts signals from pilot time-frequency bins. A Walsh decoverer 451 for antenna 1 estimates a channel from the transmit antenna 21a illustrated in FIG. 10 by Walsh decovering. Since Walsh codes are orthogonal, the Walsh decovering is the process of multiplying each of a plurality of signals by a plurality of Walsh codes, summing the products for each signal, multiplying each of the sums by the Walsh code used for antenna 1, and then summing the products, thereby recovering a signal covered with the Walsh code, while eliminating the other signals. As a consequence, the Walsh decoverer 451 receives a pilot signal transmitted through the transmit antenna 21a, i.e. estimates a channel response from the transmit antenna 21a. In the same manner, a Walsh decoverer 452 for antenna 2 estimates a channel response from the transmit antenna 21b by Walsh decovering. In this way, the Walsh decoverers 451 and 452 estimate the channel responses of the pilot time-frequency bins. To achieve channel responses for data demodulation, additional channel estimation is performed through interpolation in channel estimators 453 and 454.

A data tone extractor 460 extracts a signal delivered in data time-frequency bins. To recover a data signal transmitted from the transmitter using a multiple antenna scheme, the extracted signal is processed in a multiple-antenna signal demodulator 461. The multiple-antenna signal demodulator 461 operates in a different manner depending on the multiple antenna scheme and thus, its operation will not be described herein. For coherent demodulation in the multiple-antenna signal demodulator 461, a channel response estimator for each transmit antenna is required. Therefore, the channel estimators 453 and 454 provide channel response estimates 455 and 456, respectively, for the transmit **antennas 21a and 21b to the multiple-antenna signal demodulator 461.**

In addition to the data demodulation, the receiver has to estimate an SINR for feedback to the transmitter. Noise and interference estimators 463 and 464 calculate interference from the Walsh-decovered signals received from the Walsh decoverers 451 and 452. An SINR estimator 465 calculates an SINR based on the calculated interferences and the channel estimates 455 and 456. Each of the noise and interference estimators 463 and 464 is comprised of a delay 471, a subtractor 472, and an interference calculator 473. If, for example, a channel response is constant, delaying and subtraction of successive Walsh-decovered signals in the delay 471 and the subtractor 472 result in a noise and interference difference. The interference calculator 473 calculates an interference using noise and interference differences.

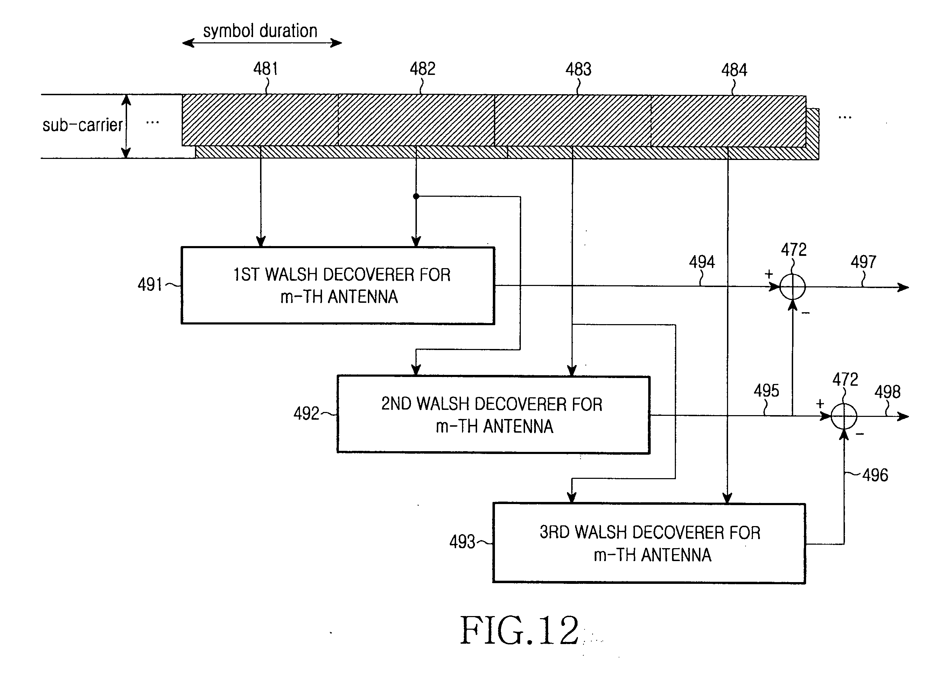

FIG. 12 illustrates a detailed exemplary operation for calculating interference in the noise and interference estimator according to an embodiment of the present invention.

Referring to FIG. 12, reference numerals 481 to 484 denote signals on pilot time-frequency bins. A first Walsh decoverer 491 for an m^{th} antenna receives the signals 481 and 482, performs Walsh decovering on them for the m^{th} antenna, and outputs the resulting signal 494. A second Walsh decoverer 492 for the m^{th} antenna receives the signals 482 and 483, performs Walsh decovering on them for the m^{th} antenna, and outputs the resulting signal 495. A third Walsh decoverer 493 for the m^{th} antenna receives the signals 483 and 484, performs Walsh decovering on them for the m^{th} antenna, and outputs the resulting signal 496. The delay 471 illustrated in FIG. 11 delays the signal 494, and the subtractor 472 subtracts the signal 495 from the signal 494 and outputs the difference signal 497 having only a noise and interference component. The delay 471 also delays the signal 495, and the subtractor 472 subtracts the signal 496 from the signal 495 and outputs the difference signal 498 having only a noise and interference component.

If, for example, the signals 481 to 484 experience almost the same channel response, the same channel response is reflected in the signals 494, 495 and 496. The signal 494 includes the noise and interference of the signals 481 and 482, the signal 495 includes the noise and interference of the signals 482 and 483, and the signal 496 includes the noise and interference of the signals 483 and 484. The subtraction of the signal 495 from the signal 494 in the subtractor 472 compensates for the channel response reflected in the signals 494 and 495, such that only a noise and interference component remains. Moreover, since both the signals 494 and 495 include the noise and interference of the signal 482, the subtraction compensates for the noise and interference of the signal 482 as well. Therefore, the signal 497 has only the noise and interference difference between the signals 481 and 483. Similarly, the subtraction of the signal 496 from the signal 495 results only the interference difference between the signals 482 and 484. In the above procedure, only the noise and interference components remain in the signals 497 and 498, without channel estimation error components. That is, noise can be calculated irrespective of channel estimation performance. Thus, interference can be estimated by calculating the variance of samples such as the signals 497 and 498. The reliability of the interference estimate increases with the number of samples.

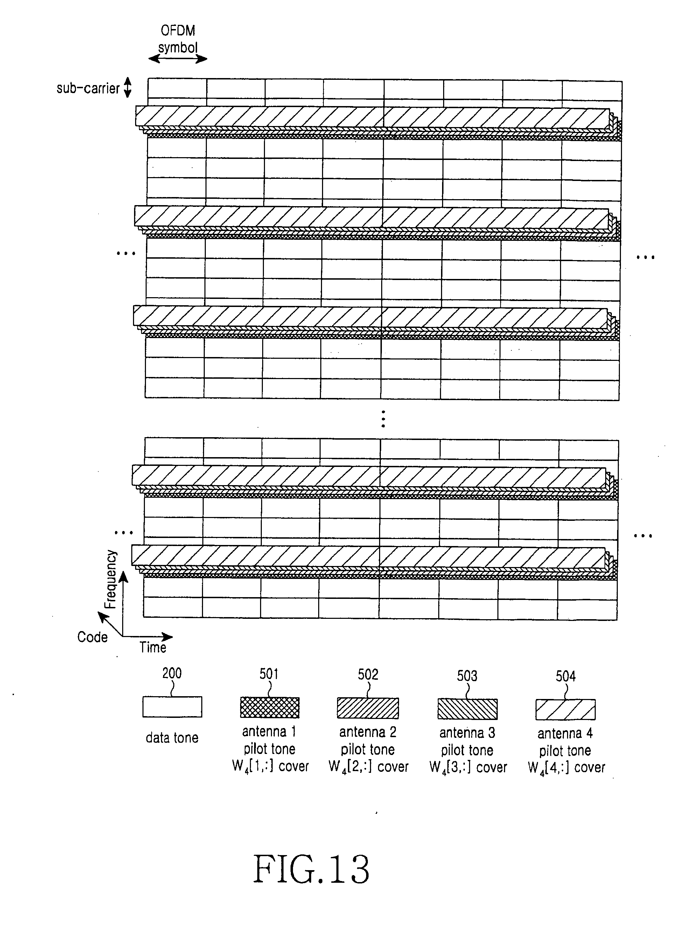

FIG. 13 illustrates an exemplary pilot allocation method for four transmit antennas according to a second embodiment of the present invention.

Referring to FIG. 13, orthogonal pilot signals are generated through Walsh covering using Walsh codes of length 4 in order to send the orthogonal pilot signals through four transmit antennas. These pilot signals are located on the same subcarriers over four successive OFDM symbols. Reference numerals 501 to 504 denote pilot signals Walsh-covered with Walsh codes 1, 2, 3 and 4 of length 4, for antennas 1, 2, 3 and 4, respectively.

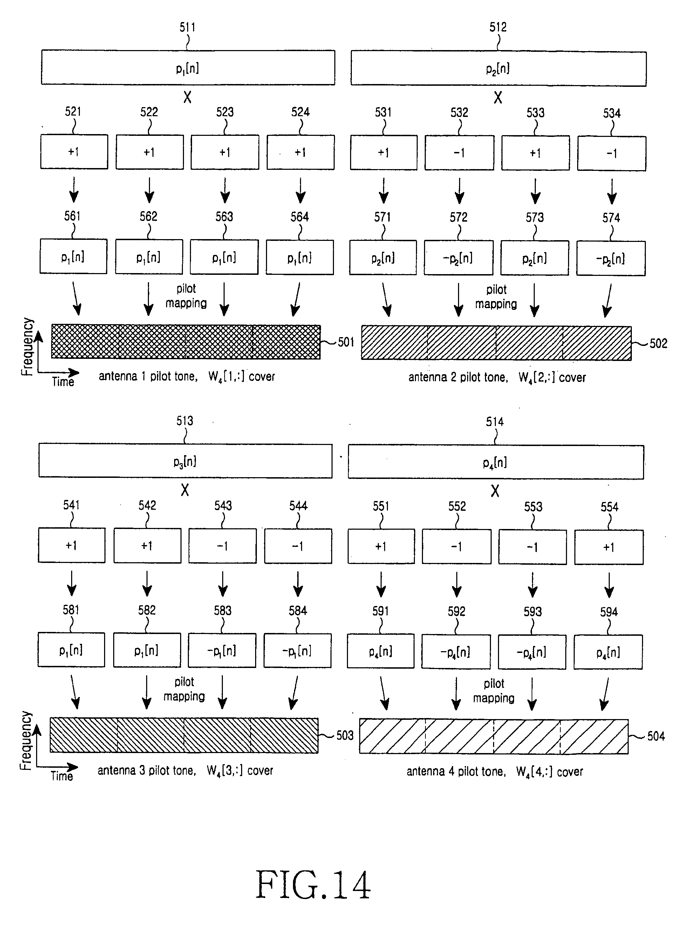

FIG. 14 illustrates a detailed exemplary operation for generating pilot signals in accordance with the pilot allocation method illustrated in FIG. 13 in the transmitter.

Referring to FIG. 14, the Walsh-covered multiple-antenna pilot generator 435 generates pilots 561 to 564 by multiplying a pilot symbol 511 P₁[n] to be sent through antenna 1 by a first Walsh code (+1, +1, +1, +1) 521, 522, 523 and 524. The pilots 561 to 564 are mapped to the same subcarrier across four successive OFDM symbols, thus forming a pilot signal 501 for antenna 1. In the same manner, pilot signals 502, 503 and 504 for antennas 2, 3 and 4 are generated.

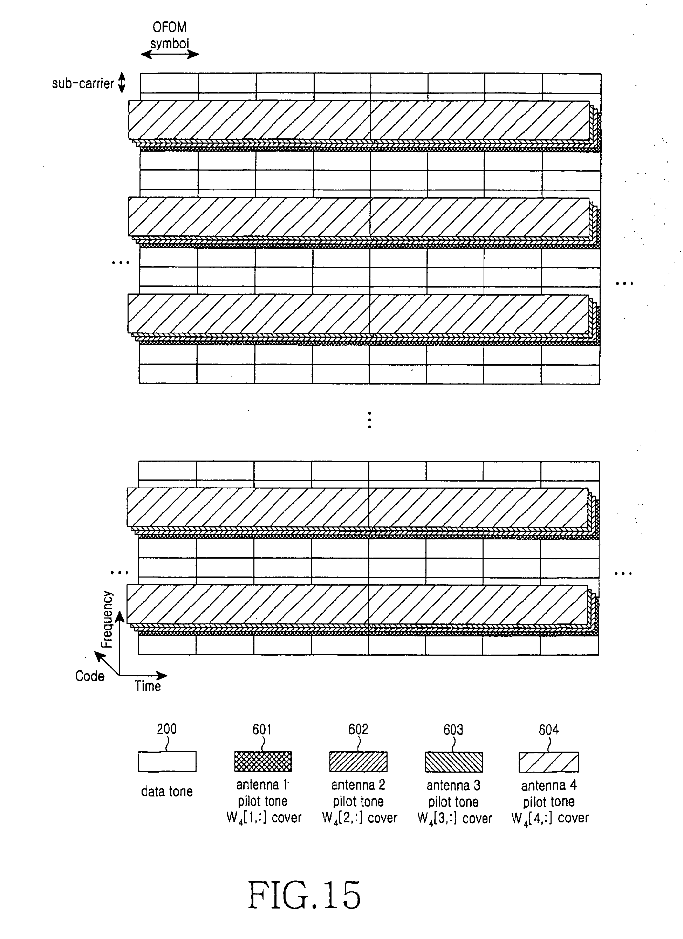

FIG. 15 illustrates an exemplary pilot allocation method for four transmit antennas according to a third embodiment of the present invention.

The method of allocating pilots to the same subcarrier in four successive OFDM symbols illustrated in FIG. 13 ensures pilot orthogonality between transmit antennas as far as the channel response does not change. To overcome this drawback, two subcarriers and two successive OFDM symbols are used for pilot transmission. Pilot signals are Walsh-covered as done in FIG. 13, but allocated to time-frequency bins in a different manner.

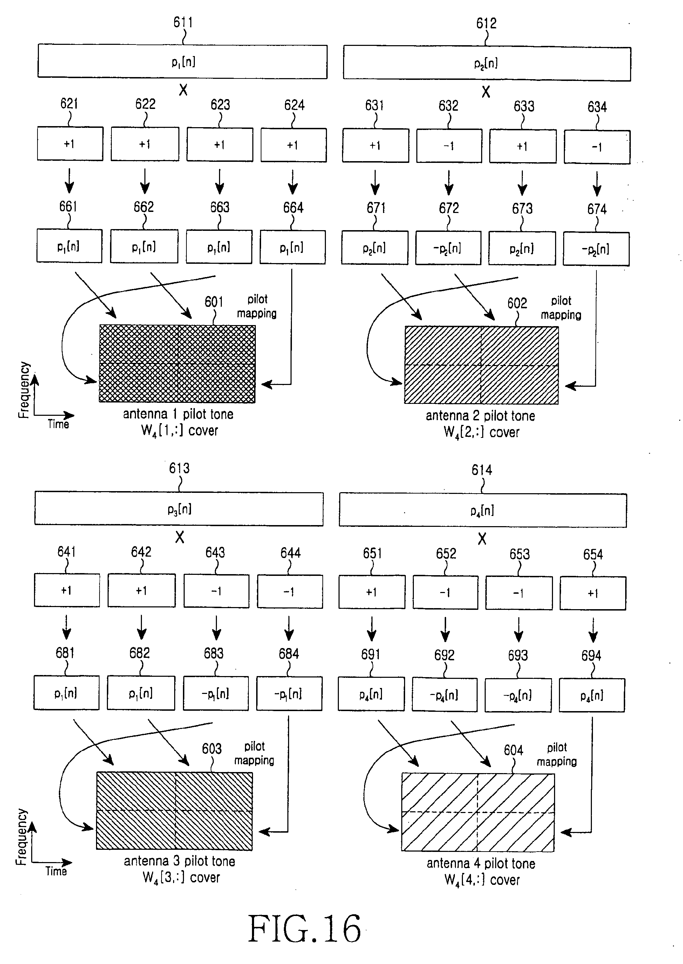

FIG. 16 FIG. 16 illustrates a detailed exemplary operation for generating pilot signals in accordance with the pilot allocation method illustrated in FIG. 15.

For a pilot signal 601 for antenna 1, Walsh-covered pilots 661 to 664 are mapped to two adjacent subcarriers in each of two adjacent OFDM symbols. In the same manner, pilot signals 602, 603 and 604 are generated for transmission through antennas 2, 3 and 4. Despite the use of twice as many time-frequency bins as those used by the pilot allocation method illustrated in FIG. 13, the problem of orthogonality loss between pilot signals from transmit antennas in a fast fading environment can be reduced.

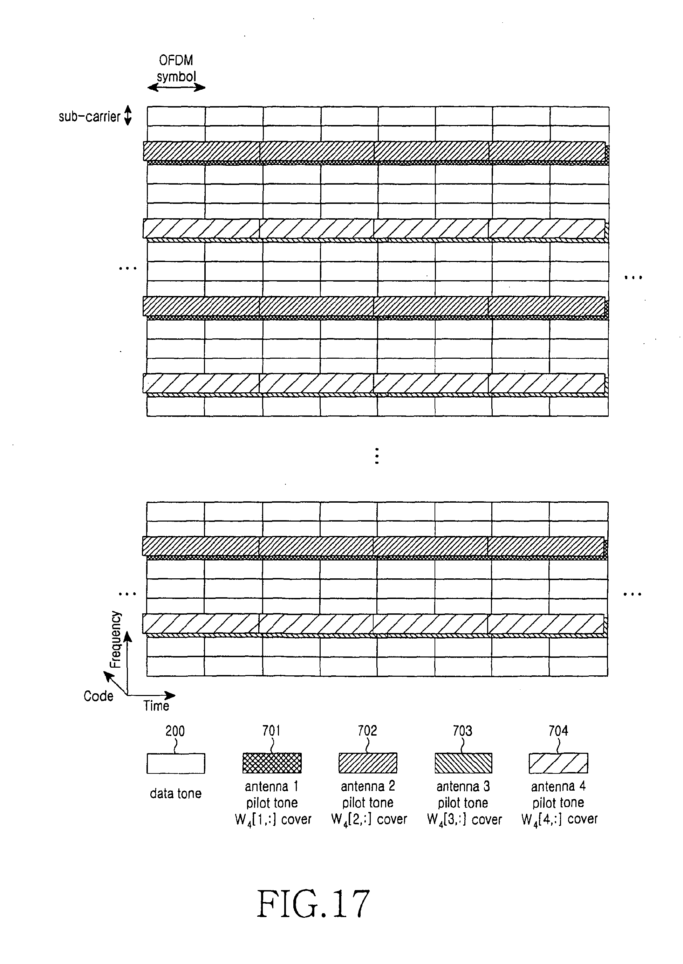

FIG. 17 illustrates an exemplary pilot allocation method using a binary Walsh code for four transmit antennas according to a fourth embodiment of the present invention.

Referring to FIG. 17, if, for example, twice as many time-frequency bins as those used for supporting two transmit antennas are available in supporting four transmit antennas, pilots can be allocated in the manner illustrated in FIG. 17. Walsh covering using Walsh codes of length 2 is performed to ensure orthogonality between pilots 701 and 702 for antenna 1 and antenna 2 and between pilots 703 and 704 for antenna 3 and antenna 4, and the pilots 701 and 702 are allocated to different subcarriers as those for the pilots 703 and 704. This pilot allocation method has the same advantages and disadvantages as those of the pilot allocation illustrated in FIG. 15 except that the pilot allocation of FIG. 17 ensures robust orthogonality between pilots for different transmit antennas, relative to the pilot allocation of FIG. 15. While the channel response has greater changes between adjacent subcarriers, orthogonality may be lost in the pilot allocation method of FIG. 15, while this problem is avoided in the pilot allocation method of FIG. 17.

The dedicated allocation of predetermined subcarriers for pilot transmission according to embodiments of the present invention may consume more time-frequency bins than the distributed pilot allocation method under some channel environments. Despite this shortcoming, the dedicated allocation of subcarriers for pilot transmission enables more accurate interference estimation. To compensate for the shortcoming, pilots can be allocated using the fixed pilot allocation and the distributed pilot allocation in combination.

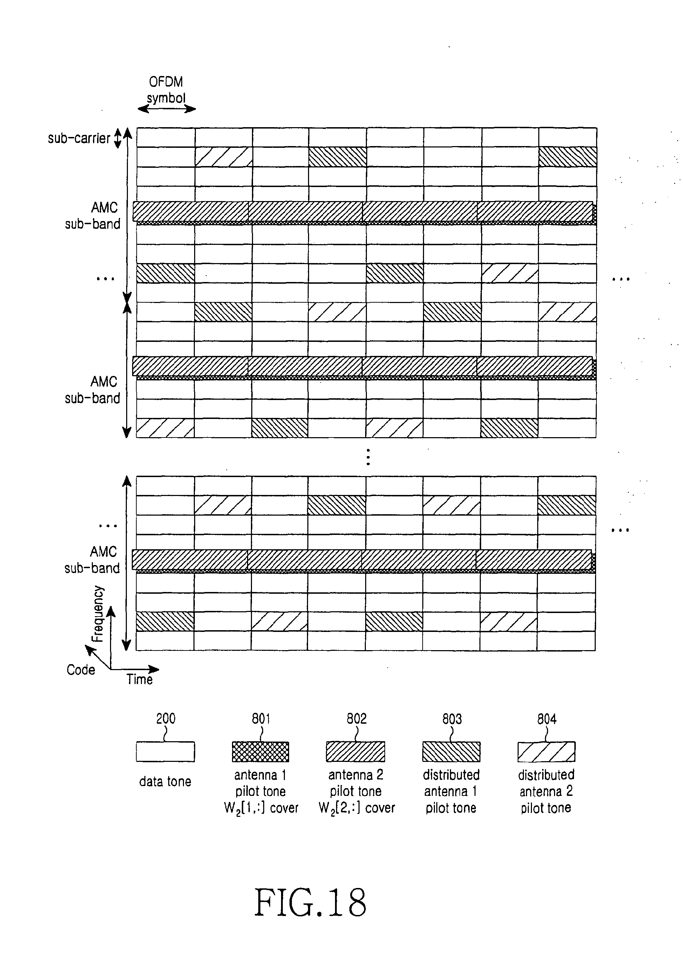

FIG. 18 illustrates an exemplary pilot allocation method using a fixed pilot allocation and a distributed pilot allocation in combination according to a fifth embodiment of the present invention.

Referring to FIG. 18, reference numerals 801 and 802 denote Walsh-covered pilot signals for antenna 1 and antenna 2, respectively. The pilot signals 801 and 802 are allocated to the same subcarriers in every OFDM symbol, one subcarrier per AMC subband. An AMC subband is a minimum frequency resource unit to which scheduling and AMC are applied. The receiver measures an SINR for each subband and reports the SINR measurements to the transmitter. Since the receiver estimates interference on an AMC subband basis, one subcarrier is allocated to a pilot signal in each AMC subband, for interference estimation. In this case, if the size of the AMC subband is too large, channel estimation for demodulation may be impossible because it is difficult to perform interpolation for estimation of a channel located between pilot tones spaced far from each other. To solve this problem, pilots are distributed between Walsh-covered pilot tones. Reference numerals 803 and 804 denote distributed pilots for antenna 1 and antenna 2, respectively. Orthogonality is ensured between the pilots 803 and 804 by allocating them to different time-frequency bins.

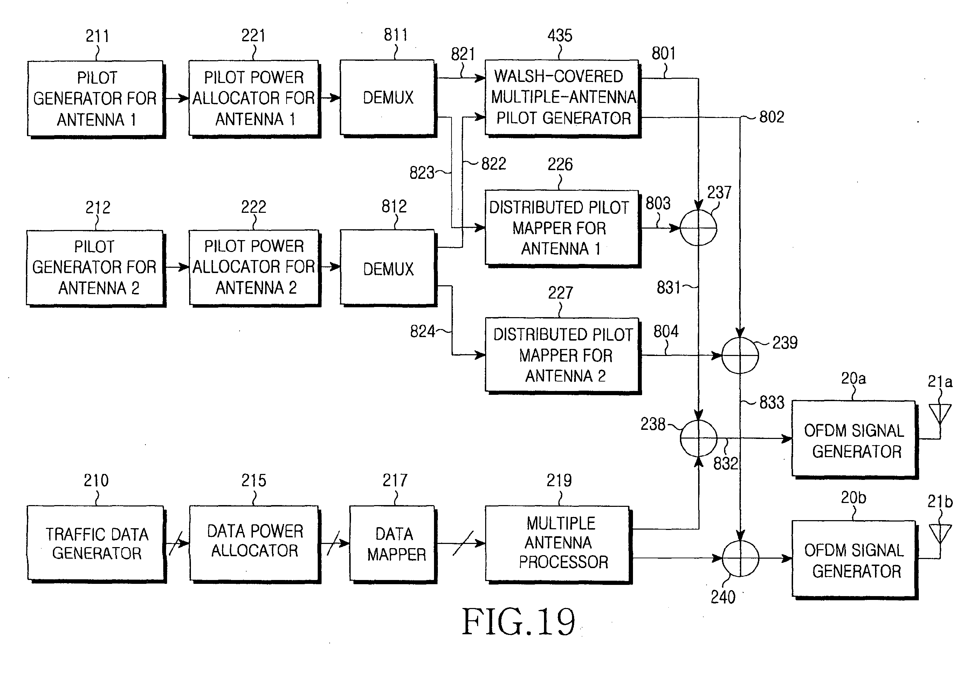

FIG. 19 is a block diagram of an exemplary OFDM transmitter with multiple antennas using the hybrid pilot allocation method according to the fifth embodiment of the present invention.

Referring to FIG. 19, pilots for antenna 1 and pilots for antenna 2 are divided into pilots to form Walsh-covered multiple-antenna pilot signals and pilots to form distributed pilot signals through a first demultiplexer (DEMUX) 811 and a second DEMUX 812. The Walsh-covered multiple-antenna pilot generator 435 Walsh-covers pilot signals 821 and 822 received from the DEMUXes 811 and 812, for transmission on the same subcarriers in each OFDM symbol.

A pilot mapper 226 for antenna 1 maps a distributed pilot signal 823 received from the DEMUX 811 to predetermined time-frequency bins. In the same manner, a pilot mapper 227 for antenna 2 maps a distributed pilot signal 824 received from the DEMUX 812 to predetermined time-frequency bins.

Reference numerals 801 and 802 denote the pilot signals output from the Walsh-covered multiple-antenna pilot generator 435. Reference numerals 803 and 804 denote the signals output from the distributed pilot mapper 226 for antenna 1 and the distributed pilot mapper 227 for antenna 2, respectively. A first adder 237 adds the signals 801 and 803 and outputs the sum signal 831. A second adder 238 adds the sum signal 831 to a data signal received from the multiple antenna processor 219, thereby creating a pilot signal 832 for antenna 1. The OFDM signal generator 20a generates an OFDM signal for transmission through antenna 1 from the pilot signal 832. A third adder 239 adds the signals 802 and 804 and outputs the sum signal 833. A fourth adder 240 adds the sum signal 833 to a data signal received from the multiple antenna processor 219, thereby creating a pilot signal for antenna 2. The OFDM signal generator 20b generates an OFDM signal for transmission through antenna 2 from the pilot signal received from the fourth adder 240.

Even for three or more transmit antenna, the hybrid pilot allocation method can use the pilot allocation method illustrated in FIGs. 13, 15 or 17, and the distributed pilot allocation method in combination.

The pilot generation and allocation system and method according to embodiments of the present invention offers a number of benefits.

For example, interference can be accurately estimated at the receiver, relative to the distributed pilot allocation method. While channel estimation errors lead to interference estimation errors in the distributed pilot allocation method, interference can be estimated irrespective of channel estimation errors in the reception and interference estimation method illustrated in FIGs. 11 and 12.

Further, despite the increased number of transmit antennas, pilots can be allocated in a desired manner with the same number of time-frequency bins. To support an increased number of transmit antenna, pilots always occupy the same subcarriers to help provide accurate interference estimation. As more antennas are used, the number of pilot subcarriers can be increased to render pilots from different transmit antennas to be orthogonal, resulting in increased consumption of resources. However, since embodiments of the present invention ensure orthogonality between antennas by use of Walsh codes, an intended pilot allocation is possible with the same number of time-frequency bins.

Still further, accurate interference estimation leads to accurate SINR estimation. Since scheduling and AMC are performed based on an accurate SINR, system capacity is increased.

While the present invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A pilot transmitting apparatus using multiple antennas in an orthogonal frequency division multiplexing (OFDM) mobile communication system, comprising:
at least one Walsh coverer for Walsh-covering each of pilot signals to be sent through each of the transmit antennas; and
at least one pilot mapper for allocating each of the Walsh-covered pilot signals to predetermined time-frequency bins which are continuous in time domain; and
at least one transmitter for transmitting each of the allocated pilot signals through each of the transmit antennas.

2. The apparatus of claim 1, wherein the at least one transmitter comprisng:
at least one adder for adding each of the allocated pilot signals to a data signal; and
at least one transmission signal generator for generating OFDM signals using signals received from the at least one adder.

3. The apparatus of claim 1, wherein the at least one pilot mapper allocates the each of the Walsh-covered pilot signals to the same time-frequency bins.

4. The apparatus of claim 1, wherein the at least one Walsh coverer uses a walsh code with a length determined by a number of the transmit antennas.

5. An apparatus for receiving a pilot signal from multiple transmit antennas in an orthogonal frequency division multiplexing (OFDM) mobile communication system, comprising:
at least one pilot extractor for extracting each of pilot signals for the transmit antennas wherein the each of pilot signals are transmitted through predetermined time-frequency bins which are continuous in time domain;
at least one Walsh decoverer for Walsh-decovering each of the pilot signals.

6. The apparatus of claim 5, wherein the at least one pilot extractor extracts the each of the Walsh-covered pilot signals from the same time-frequency bins.

7. The apparatus of claim 5, wherein the at least one Walsh decoverer uses a walsh code with a length determined by a number of the transmit antennas.

8. The apparatus of claim 5, further comprising:
at least one noise and interference estimator for performing interference estimation and channel estimation for each of the Walsh-decovered pilot signals; and
a signal-to-interference and noise ratio (SINR) estimator for estimating an SINR using interference estimates and channel estimates received from the at least one noise and interference estimator.

9. The apparatus of claim 8, wherein the at least one noise and interference estimator comprising:
a delay for delaying each of the Walsh-decovered pilot signals and outputting the delayed Walsh-decovered pilot signal upon receipt of a following Walsh-decovered pilot signal;
a subtractor for subtracting the following Walsh-decovered pilot signal from the delayed Walsh-decovered pilot signal and outputting a noise and interference difference; and
an interference calculator for calculating interference using the noise and interference difference.

10. A pilot transmitting method using multiple antennas in an orthogonal frequency division multiplexing (OFDM) mobile communication system, comprising the steps of:
Walsh-covering each of pilot signals to be sent through each of the transmit antennas; and
allocating each of the Walsh-covered pilot signals to predetermined time-frequency bins which are continuous in time domain; and
transmitting each of the allocated pilot signals through each of the transmit antennas.

11. The method of claim 10, wherein the transmission step comprises the steps of:
adding each of the allocated pilot signals to a data signal and outputting sum signals; and
generating OFDM signals using the sum signals and transmitting each of the OFDM signals through each of the transmit antennas.

12. The method of claim 10, wherein the each of the Walsh-covered pilot signals are allocated to same time-frequency bins..

13. The method of claim 10, wherein a walsh code used in the Walsh-covering step has a length determined by a number of the transmit antennas.

14. The method of claim 13, wherein the walsh code length is 2, if the number of the transmit antennas is 2.

15. The pilot transmitting method of claim 14, wherein the walsh code length is 4, if the number of the transmit antennas is 4.

16. The method of claim 10, wherein at least two time-frequency bin among the predetermined time-frequency bins are adjacent in frequency domain.

17. The method of claim 10, wherein if the number of the transmit antennas is 4, the Walsh covering step comprises the step of Walsh-covering the pilot signals with Walsh codes of length 2.

18. The pilot transmitting method of claim 17, wherein the allocation and transmission step comprises the steps of:
mapping Walsh-covered pilot signals for two transmit antennas and Walsh-covered pilot signals for the other two transmit antennas to different subcarriers; and
transmitting the mapped pilot signals through the transmit antennas.

19. The pilot transmitting method of claim 10, wherein if the number of the transmit antennas is 4, the allocation and transmission step comprises the steps of:
mapping the Walsh-covered pilot signals to one subcarrier in each adaptive modulating and coding (AMC) subband and distributed pilots to different time-frequency bins; and
transmitting the mapped pilot signals through the transmit antennas.

20. A method of receiving a pilot signal from multiple transmit antennas in an orthogonal frequency division multiplexing (OFDM) mobile communication system, comprising the steps of:
extracting each of pilot signals for the transmit antennas wherein the each of pilot signals are transmitted through predetermined time-frequency bins which are continuous in time domain ;
Walsh-decovering each of the pilot signals.

21. The method of claim 20, further comprises:
performing interference estimation and channel estimation for each of the Walsh-decovered pilot signals; and
estimating a signal-to-interference and noise ratio (SINR) using interference estimates and channel estimates achieved from the interference estimation and channel estimation.

22. The method of claim 21, wherein the interference estimation and channel estimation step comprises the steps of:
delaying each of the Walsh-decovered pilot signals and outputting the delayed Walsh-decovered pilot signal upon receipt of a following Walsh-decovered pilot signal;
subtracting the following Walsh-decovered pilot signal from the delayed Walsh-decovered pilot signal and outputting a noise and interference difference; and
calculating interference using the noise and interference difference.

23. A pilot transmitting apparatus using multiple antennas in an orthogonal frequency division multiplexing (OFDM) mobile communication system, comprising:
at least one demultiplexer for dividing pilot signals to be sent through the transmit antennas into Walsh-covered pilot signals and distributed pilot signals; and
at least one transmitter for mapping the Walsh-covered pilot signals to one subcarrier in each adaptive modulating and coding (AMC) subband and distributed pilots to different time-frequency bins and transmitting the mapped pilot signals through the transmit antennas.

24. The pilot transmitting apparatus of claim 23, wherein the at least one transmitter comprises:
a multiple-antenna pilot generator for Walsh-covering pilot signals and mapping the Walsh-covered pilot signals to a predetermined subcarrier in each OFDM symbol;
at least one distributed pilot mapper for mapping the distributed pilot signals to different time-frequency bins;
at least one first adder for summing a signal received from the multiple-antenna pilot generator and a signal received from the at least one distributed pilot mapper;
at least one second adder for summing a signal received from the at least one first adder and a data signal; and
at least one transmission signal generator for generating an OFDM signal using a signal received form the at least one second adder.
